# EUROPÄISCHE PATENTANMELDUNG

(11) **EP 1 102 206 A1**
(43) Veröffentlichungstag der Anmeldung: **23.05.2001**
(21) Anmeldenummer: 99122688.7
(22) Anmeldetag: 15.11.1999
(51) Int. Cl.: G06K 19/07

(54) **Kontaktloser Transponder**

(71) Anmelder: Infineon Technologies AG, 81669 München (DE)
(72) Erfinder: Reiner, Robert, 85579 Neibiberg (DE); Melchior, Marc, 85411 Hohenkammer (DE); Gaul, Lorenz, 85101 Lenting (DE)
(74) Vertreter: Hermann, Uwe, Dipl.-Ing.

(57) **Zusammenfassung**

Um bei einem kontaktlosen Transponder mit einem Spannungsbegrenzer der eine überhohe Versorgungsspannung in Wärme umwandelt, eine zu starke schädigende Wärmeentwicklung zu vermeiden, ist ein Überlastschutz vorgesehen, der Mittel zum Erkennen des Belastungszustandes des Spannungsbegrenzers (16) besitzt und mittels einer Auswerteeinheit (18) bei Erreichen eines vordefinierten Überlastungszustandes des Spannungsbegrenzers (16) durch Aufschalten einer niederohmigen Last parallel zur Antenne (2) die überhohe Versorgungsspannung absenkt.

## Beschreibung

Die Erfindung betrifft einen kontaktlosen Transponder gemäß dem Oberbegriff des Anspruchs 1.

Ein Transponder wird im Zusammenwirken mit einem Schreib/Lesegerät zur kontaktlose Datenübertragung nach dem Abfrage-Antwort-Prinzip eingesetzt. Zunächst wird dabei ein vom Schreib-/Lesegerät ausgesendetes hochfrequentes Abfragesignal vom Transponder nach Kennung und Abfragebefehl ausgewertet. Daraufhin wird automatisch ein Antwortsignal an das Schreib/Lesegerät zurückgesendet, welches anschließend hinsichtlich der Antwortinformation ausgewertet wird. Derartige kontaktlose Datenübertragungssysteme werden beispielsweise bei automatischen Straßenmauterhebungssystemen zur Fahrzeugerfassung, bei Werkzeugwechselsystemen zur Werkzeugerkennung durch die Maschinensteuerung oder bei Skiliftstationen zur sogenannten "handsfree"-Zutrittskontrolle eingesetzt.

Ein gattungsgemäßer Transponder ist aus der EP 669 591 A2 bekannt. Der Transponder besitzt eine spulenartige Antenne zum Senden und Empfangen von modulierten HF-Signalen und zur Ableitung der Versorgungsspannung aus dem HF-Signal. Zum Empfangen des abfrageführenden pulsweitenmodulierten HF-Signals ist die Antenne mit einer Empfangseinheit zur Demodulation verbunden. Zum Senden eines antwortführenden modulierten HF-Signals ist die Antenne weiterhin mit einer die entsprechende Modulation des HF-Signals ausführenden Sendeeinheit verbunden. Die Modulation des HF-Signals erfolgt über einen Transistor, der die Spannung an der Antenne im Rhythmus der gelieferten Datensignalform belastet (Belastungsmodulation). Eine übergeordnete Steuereinheit mit zugeordneter nichtflüchtiger Speichereinheit in Form eines EEPROM's ist zur Steuerung interner Betriebsabläufe - wie Übertragungsprotokolle, Datenprüfung, Kryptographieverfahren, Zugriffskontrolle etc. - vorgesehen. Schließlich bildet ein ebenfalls mit der Antenne verbundener Brückengleichrichter die Spannungsversorgungseinheit des Transponders. Die Spannungsversorgung erfolgt bei dem passiven Transponder bedarfszeitpunktsgerecht bei Annäherung an das Schreib/Lesegerät aufgrund des übertragenen HF-Signals. Eine von der Antenne aufgenommene überhohe Versorgungsspannung, die insbesondere bei hohen Feldstärken in unmittelbarer Nähe der Antenne des Schreib-/Lesegerätes auftreten kann, wird dabei mittels eines Spannungsbegrenzers auf Betriebsspannungsniveau abgesenkt.

In den Standards ISO-14443 und ISO-15693 werden Grenzwerte für Feldstärken festgesetzt, innerhalb derer die Funktionsfähigkeit des Transponders gewährleistet sein muß. Außerdem ist ein darüberliegender Grenzwert festgelegt, unter dem der Transponder nicht zerstört werden darf. Bei überhohen Feldstärken darf zwar nach dem ISO-Standard der Transponder geschädigt werden, doch ist sowohl dem Systembetreiber als auch dem Hersteller daran gelegen, daß der Grenzwert, ab dem eine Zerstörung eintritt so hoch wie möglich liegt.

Zur Lösung des Zerstörungsproblems ist es im Stand der Technik vorgesehen durch den vorstehend genannten Spannungsbegrenzer die Versorgungsspannung stets unterhalb der Durchbruchspannung der Schaltung des Transponders zu halten, um insoweit eine Zerstörung bei großen Feldstärken zu vermeiden. Die Begrenzungsspannung muß dabei relativ hoch liegen, damit durch die Begrenzung nicht die Funktion der Schaltung beeinträchtigt wird. Durch eine hohe anliegende Versorgungsspannung wird vom Spannungsbegrenzer im Begrenzungsfall eine hohe elektrische Leistung in Wärme umgesetzt. Da ein Transponder meist in Chipkarten integriert ist, kann die anfallende Wärme das Material der Chipkarte derart stark überhitzen, daß sich die Chipkarte in unansehnlicher Weise verfärbt oder in einer Weise irreversibel verformt, daß die Funktionsfähigkeit nicht mehr gegeben ist.

Neben der vorstehend beschriebenen Ausführung des Transponders als passiver Transponder sind auch aktive Transponder allgemein bekannt, die im Unterschied zu den allerdings weiter verbreiteten passiven Transpondern eine eigene Batterie, ein Solarelement oder einen Netzanschluß als primäre Spannungsversorgungseinheit besitzen. Daneben kann die Versorgungsspannung jedoch auch über das von der Antenne aufgenommene HF-Signal beeinflußt werden. Derartige aktive Transponder sind ebenfalls vom Rahmen der vorliegenden Erfindung umfaßt.

Es ist die Aufgabe der Erfindung einen gattungsgemäßen Transponder dahingehend weiterzuverbessern, daß unter Beibehaltung der weitestgehenden Funktionsfähigkeit eine schädliche, von hohen Feldstärken verursachte Wärmeentwicklung unterbunden wird.

Die Aufgabe wird ausgehend von einem Transponder gemäß dem Oberbegriff des Anspruchs 1 in Verbindung mit dessen kennzeichnenden Merkmalen gelöst. Die nachfolgenden, vom Anspruch 1 abhängigen Ansprüche geben vorteilhafte Weiterbildungen der Erfindung wieder.

Die Erfindung schließt die technische Lehre ein, daß Mittel zum Erkennen des Belastungszustandes des Spannungsbegrenzers vorgesehen sind und eine nachgeschaltete Auswerteeinheit bei Erreichen eines vordefinierten Überlastungszustandes des Spannungsbegrenzers durch Aufschalten einer niederohmigen Last parallel zur Antenne die Versorgungsspannung soweit unter Betriebsspannungsniveau absenkt, daß durch die Auswerteeinheit noch ein Halten des Zustand der niedrigen Versorgungsspannung gewährleistbar ist. Damit kann die durch Überlastung des Spannungsbegrenzers anfallende Wärmeentwicklung gestoppt und abgebaut werden.

Der Vorteil dieses neben dem Spannungsbegrenzer vorgesehenen Überlastschutzes im Transponder ist, daß in einfacher Weise eine über die Antenne eintretende überhohe Versorgungsspannung dann eliminiert wird, wenn der Spannungsbegrenzer eine zu hohe Leistung in Wärme umzusetzen hat, also eine schädliche Wärmeentwicklung indiziert ist. Da der Überlastschutz erst dann einsetzt, wenn der Belastungszustand des Spannungsbegrenzers eine im Hinblick auf die Wärmeentwicklung kritische Grenze erreicht, ist eine weitestgehende Funktionsfähigkeit des Transponders gewährleistet. Der Transponder wird also seine Funktionsfähigkeit nicht einstellen, wenn die Notwendigkeit hierfür nicht zuverlässig über die Mittel zum Erkennen des Belastungszustandes angezeigt ist. Das Aufschalten der niederohmigen Last parallel zur Antenne, d.h. direkt an den beiden Enden der vorzugsweise spulenartigen Antenne, bekämpft die überhohe Versorgungsspannung an einer Stelle, wo diese in einfacher Weise durch die nahezu Kurzschlußwirkung der Last eliminiert werden kann. Der damit erzielte Zustand einer niedrigen Versorgungsspannung - vorzugsweise 1 bis 2 Volt - gewährleistet ein Halten des Spannungszustandes durch die Auswerteeinheit; die bestimmungsgemäße Funktionsfähigkeit des Transponders ist jedoch nicht mehr gegeben, da hierfür Betriebsspannungsniveau - vorzugsweise 5,5 Volt - erforderlich ist.

Es ist bereits durch theoretische Betrachtung ermittelbar, daß bei den zu erwartenden Innenwiderständen des Transponders die Leistungsaufnahme der Schaltung bei hohen Feldstärken um so niedriger ist, je niedriger die Versorgungsspannung durch den Spannungsbegrenzer begrenzt wird, obwohl dabei ein höherer Stromfluß auftritt. Da mit der erfindungsgemäßen Lösung eine niedrige Versorgungsspannung weit unterhalb des Betriebsspannungsniveaus erreicht wird, kann der Transponder im Oberlastfall in diesem Zustand gehalten werden, bis er wieder aus dem Feld entfernt wird oder bis die Feldstärke unter Beachtung des Hysterese-Verhaltens wesentlich abgesunken ist.

Ausgehend hiervon besteht eine die Erfindung hinsichtlich einer funktionsgerechten Realisierung des Überlastschutzes verbessernde Maßnahme darin, daß zum Halten des Zustandes der niedrigen Versorgungsspannung die Auswerteeinheit ein Flip-Flop-Glied umfaßt, das die Auswerteeinheit bei Erreichen des Überlastzustandes setzt, um die niederohmige Last aufzuschalten und das sich bei Fortfall der über die Antenne aufgenommenen Versorgungsspannung, d.h. bei Entfernen des Transponders aus dem Feld, selbsttätig rücksetzt. Das Rücksetzen des Flip-Flop-Gliedes erfolgt hier also selbsttätig über eine Versorgungsspannung nahe Null, bei der sich mangels elektrischer Energie die gesamte Schaltung des Transponder rücksetzt. Flüchtige Speicher, wie das Flip-Flop, verlieren demzufolge ihren Zustand.

Die Mittel zum Erkennen des aktuellen Belastungszustandes des Spannungsbegrenzers können unterschiedlich ausgebildet sein und an unterschiedlicher Stelle des Transponders angreifen. So ist es zum einen möglich durch eine Strommessung den Strom im Spannungsbegrenzer zu messen, um einen Rückschluß auf den Belastungszustand des Spannungsbegrenzers zu treffen. Der Stromfluß ist um so größer, je höher die Belastung ist. Zum anderen ist es möglich, den aktuellen Belastungszustandes des Spannungsbegrenzers anhand der an der Antenne anliegenden Spannung zu bestimmen. Bei hoher Spannung ist eine hohe Belastung indiziert. Die Spannung kann daneben auch an anderer Stelle an geeigneten Knoten innerhalb der Schaltung gemessen werden. Eine andere alternative Möglichkeit besteht darin, den aktuellen Belastungszustand des Spannungsbegrenzers durch die Betriebstemperatur des Transponders mittels eines Temperaturfühlers zu ermitteln. Diese Methode detektiert demnach die Wirkung der Überlast. Schließlich kann auch im Sinne einer Detektion der Ursache einer Überlast direkt die empfangene Feldstärke des HF-Signals durch einen Feldstärkemesser detektiert werden, um auf den zu erwartenden Belastungszustand des Spannungsbegrenzers zu schließen. Diese direkteste Methode der Feldstärkemessung ist zwar in unmittelbarer Anlehnung an den ISO-Standard normentsprechend realisierbar, da hierbei andere Störgrößen keinen Einfluß haben; jedoch ist zur schaltungstechnischen Umsetzung im Vergleich zu den vorstehend aufgezeigten Lösungen zur Erkennung des aktuellen Belastungszustandes des Spannungsbegrenzers derzeit noch eine relativ aufwendige Meßanordnung erforderlich. Im übrigen ist es auch denkbar mehrere der vorstehenden Lösungen untereinander zu kombinieren, um insoweit ein optimales Meßergebnis zu erhalten.

Bei dem gattungsgemäßen Transponder wird die Versorgungsspannung vorzugsweise vollständig aus dem übermittelten HF-Signal abgeleitet. In diesem Falle gewinnt eine der Antenne nachgeschaltete Gleichrichtereinheit vollständig aus dem empfangenen HF-Signal die Betriebsspannung, wobei ein Stützkondensator zur Ladungsspeicherung vorgesehen ist. Bei einer zusätzlichen Spannungsversorgung über Batterie oder einer Solarzelleneinrichtung oder dergleichen, kann diese zusätzliche Versorgungsspannung des insoweit aktiven Transponders im Überlastfall abgetrennt werden, um ein wie vorstehend beschriebenes Rücksetzen bei einer Versorgungsspannung nahe Null zu ermöglichen.

Besonders vorteilhaft ist es, wenn der Transponder in CMOS-Technologie ausgeführt ist, wobei unter Nutzung des nachstehend eingehender erläuterten Latchup-Effekts der Transponder in den Zustand der abgesenkten Versorgungsspannung schaltbar ist. Die CMOS-Technologie garantiert eine zuverlässige Funktion des Transponders bei relativ geringer Leistungsaufnahme. Weiterhin wird der von der CMOS-Technologie her als negativ bekannte Latchup-Effekt in positiver Weise zur Realisierung des Überlastschutzes augenutzt. Vorzugsweise ist die den Latchup-Effekt bewirkende doppelte Schaltungsstruktur auf dem Substrat schaltungstechnisch vor dem Gleichrichter der Transponderschaltung angeordnet.

Weitere die Erfindung verbessernde Maßnahmen sind in den abhängigen Ansprüchen angegeben oder werden nachstehend gemeinsam mit der Beschreibung eines bevorzugten Ausführungsbeispiels der Erfindung anhand der Figuren näher dargestellt. Es zeigt:
Figur 1 eine prinzipielle Darstellung eines aus Transponder und Schreib-/Lesegerät bestehenden kontaktlosen Datenübertragungssystems,
Figur 2 eine Blockschaltbilddarstellung des prinzipiellen Aufbaus eines Schreib-/Lesegerätes,
Figur 3 eine Blockschaltbilddarstellung des prinzipiellen Aufbaus eines kontaktlosen passiven Transponders,
Figur 4 ein Schaltbild einer Thyristortruktur des Überlastschutzes innerhalb des Transponders,
Figur 5 ein Schaltbild einer ergänzenden Schaltung für eine alternative Detektion der Versorgungsspanung,
Figur 6 ein Schaltbild eines Gleichrichters als Bestandteil der Spannungsversorgungseinrichtung des Transponders und
Figur 7 eine prinzipielle Anordnung der in Figur 4 dargestellten Schaltung gemeinsam mit einer Gleichrichterschaltung nach Figur 6 auf einem Silizium-Substrat in CMOS-Technologie.

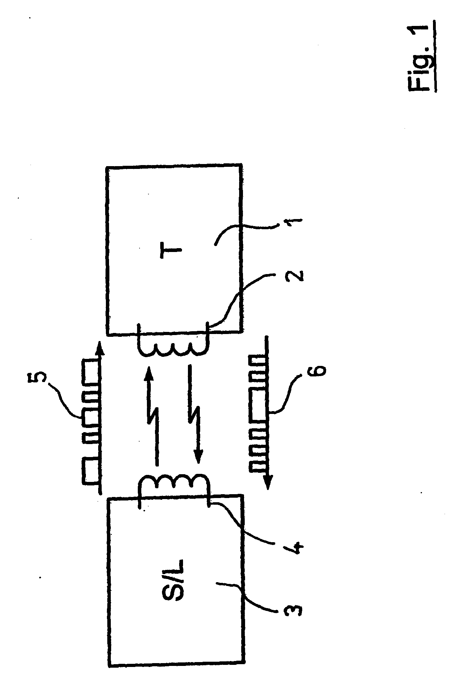

Ein kontaktloses Datenübertragungssystem besteht gemäß Figur 1 aus einem passiven Transponder 1, der über eine Antenne 2 mittels HF-Signalen mit einer einem Schreib-/Lesegeräte 3 zugeordneten Antenne 4 in bidirektionaler Verbindung für einen Datenaustausch steht. Zu diesem Zwecke sendet die Antenne 4 des Schreib-/Lesegerätes 3 ein HF-Signal aus, das die für den passiven Transponder benötigte Energie transportiert und außerdem den Systemtakt des Datenübertragungssystems definiert. Der Transponder 1 gewinnt die benötigte Versorgungsspannung seiner Schaltung aus dem HF-Signal des Schreib-/Lesegerätes 3. Ein pulsweiten-moduliertes Abfragesignal 5 wird vom Transponder 1 hinsichtlich Kennung und Abfragebefehl ausgewertet. Daraufhin sendet der Transponder 1 automatisch ein belastungs-moduliertes Antwortsignal 6 an das Schreib-/Lesegerät 3 zurück, welches anschließend vom Schreib-/Lesegerät 3 hinsichtlich der Antwortinformation ausgewertet wird.

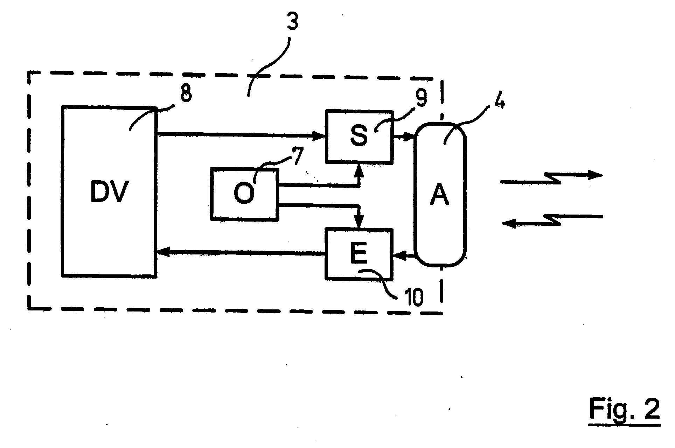

Gemäß der Prinzipdarstellung von Figur 2 enthält das Schreib/Lesegerät 3 einen Oszillator 7, der das HF-Signal zur Übertragung von Energie, Takt und Abfragedaten generiert. Die Frequenz des HF-Signals führt die Zeitbasis des Systemtakts sowohl im Schreib-/Lesegerät 3 als auch im Transponder 1. Dieser Systemtakt wird im Schreib-/Lesegerät 3 mittels eines Taktableiters gewonnen. Die Abfragedaten, die aus einer Datenverarbeitungsanlage 8 fließt, wird über einem in einer Sendeeinheit 9 integrierten Modulator dem HF-Signal des Oszillators 7 in diesem Ausführungsbeispiel durch Pulsweitenmodulation aufmoduliert. Die Pulsweitenmodulation bewirkt Austastlücken, welchen eine größere oder kleinere Anzahl von HF-Schwingungen folgt. Die Signallänge nach jeder Austastlücke ist ein Kriterium für eine digitale Null- oder Eins-Information der zu übertragenen Daten. Das modulierte HF-Signal wird über die hier spulenartig ausgebildete Antenne 4 ausgesendet. Das Schreib-/Lesegerät 3 besitzt außerdem eine Empfangseinheit 10 deren integrierter Demodulator über die Antenne 4 das eine Antwort beinhaltende HF-Signal des Transponders 1 erhält. Der gesamte Datenaustausch kann hierbei vorzugsweise im Vollduplex-Betrieb oder auch im Halbduplex-Betrieb erfolgen. Nach Demodulation des empfangenen HF-Signals werden die selektierten Daten der nachgeschalteten Datenverarbeitungsanlage 8 zur Verfügung gestellt.

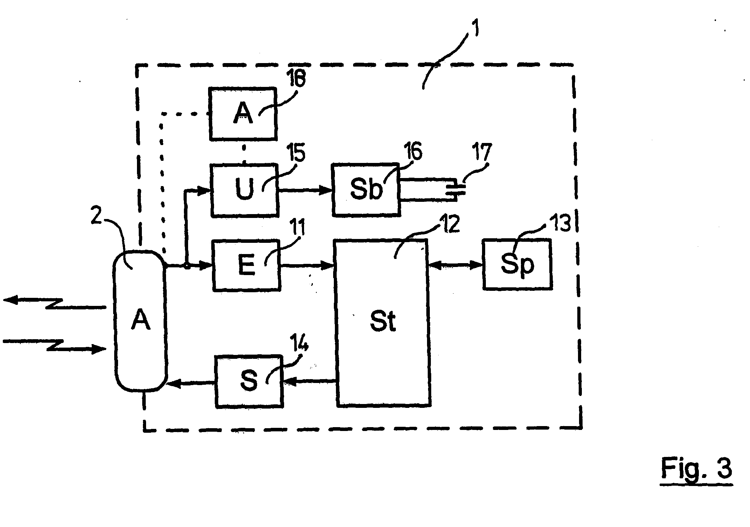

Der passive Transponder 1 besteht nach Figur 3 prinzipiell aus einer Empfangseinheit 11, die über die Antenne 2 den Systemtakt erfaßt und die das empfangene pulsweitenmodulierte und eine Abfrage beinhaltende HF-Signal demoduliert. Das digitalisierte Signal gelangt als Abfrage zur Weiterverarbeitung in eine Steuereinheit 12 der in diesem Ausführungsbeispiel eine nichtflüchtige Speichereinheit 13 in Form eines EEPROM-s zugeordnet ist. Die Steuereinheit kontrolliert die Funktion des Transponders 1. Je nach den Erfordernissen können unterschiedliche Übertragungsprotokolle, Datenprüfungsabläufe, Kryptographiemethoden, Zugriffskontrollen und andere logische Vorgänge implementiert werden. Insbesondere wird durch die Steuereinheit der Datenstrom in Senderichtung gesteuert. Dieser Datenstrom fließt ausgelöst von der Abfrage als Antwort von der Speichereinheit 13 in die Steuereinheit 12 zur Datenaufbereitung und danach in eine Sendeeinheit 14. Die Sendeeinheit 14 umfaßt einen Modulator hier in Form eines Transistors, der die Spannung an der Antenne 2 im Rhythmus der von der Steuereinheit 12 gelieferten Signalform belastet. Das insoweit belastungsmodulierte, der Abfrage entsprechende HF-Signal der Antwort wird von der Antenne 2 an das Schreib/Lesegerät 3 abgestrahlt.

Der Transponder 1 umfaßt neben den vorstehend beschriebenen Mitteln zur Informationsverarbeitung weiterhin eine Spannungsversorgungseinheit 15, die hier einen Brückengleichrichter enthält und die Versorgungsspannung für den Transponder 1 durch Gleichrichten des HF-Signals gewinnt. Die derart abgeleitete Versorgungsspannung wird von einem mit der Spannungsversorgungseinheit 15 zusammenwirkenden Spannungsbegrenzer 16 auf einen der Betriebsspannung entsprechenden Wert von vorzugsweise 5,5 Volt geregelt. Die aufgenommene Leistung wird dabei in Wärme umgesetzt. Ferner ist ein Stützkondensator 17 als Ladungsträger zum Stützen der Versorgungsspannung vorgesehen. Die Energieversorgung des passiven Transponders 1 erfolgt demnach bei Annäherung an das Schreib-/Lesegerät 3 aufgrund des übertragenen HF-Signals.

Eine überhohe Wärmeentwicklung wird im Sinne eines Überlastschutzes bei Überschreiten des Belastungszustandes des Spannungsbegrenzers 16 mittels einer Auswerteeinheit 18 derart gestoppt, daß durch Aufschalten einer niederohmigen Last über die beiden Enden der Antenne 2 die von dort aufgenommene Leistung über eine nahezu Kurzschlußwirkung wesentlich reduziert wird, da die Spannung drastisch unter Betriebsspannungsniveau sinkt. Die Last ist so bemessen, daß lediglich eine Versorgungsspannung von beispielsweise 1 Volt im Transponder zur Verfügung steht. Diese niedrige Versorgungsspannung ist gerade noch ausreichend, um den Transponder 1 über die Auswerteeinheit 18 in diesem Zustand zu halten. Alle anderen Funktionen des Transponders, insbesondere hinsichtlich des Datenaustauschs, sind nun nicht mehr ausführbar. In diesem Zustand kann der Transponder 1 die entstandene Wärme abbauen und wird nicht weiter einer Wärmeentwicklung durch den Betrieb des Spannungsbegrenzers 16 ausgesetzt, so daß der Transponder 1 hierdurch keinen Schaden nehmen kann.

Zum Erkennen des Belastungszustandes des Spannungsbegrenzers 16 dient in diesem Ausführungsbeispiel eine Überwachung der Versorgungsspannung an der Antenne 2. Aus dem überwachten Spannungswert ist schaltungstechnisch ein Rückschluß auf den Belastungszustand des Spannungsbegrenzers 16 möglich und über einen Grenzwert ein Überlastzustand definierbar, bei dem die Auswerteeinheit 18 die niederohmige Last auf die Antenne 2 schaltet, um den Überlastschutz zu gewährleisten.

Ein Abschalten des Überlastschutzes erfolgt bei Entfernen des Transponders 1 aus dem Wirkungsbereich des Schreib/Lesegerätes 3. Hierbei sinkt die Versorgungsspannung weiter ab, so daß sich die Schaltung des Transponders 1 selbsttätig zurücksetzt.

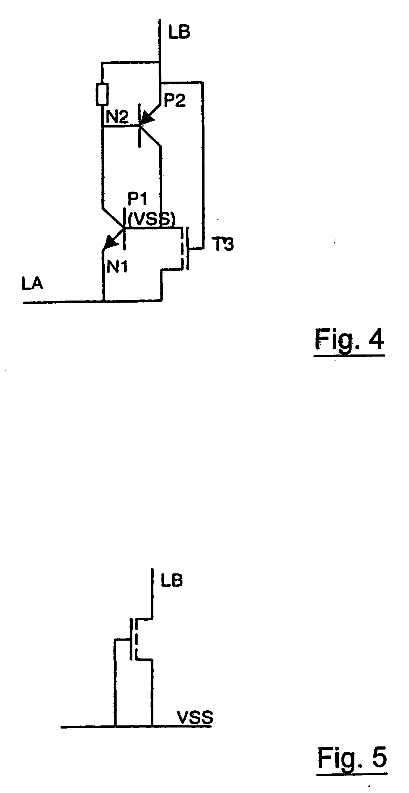

Die vorstehend beschriebene Überlastschutzfunktion wird nach Figur 4 mittels einer Schaltung in CMOS-Technologie bewirkt. Die dargestellte Thyristorschaltung ist an die beiden Spulenenden LA und LB der Antenne 2 angeschlossen und bewirkt eine niederohmige Verbindung zwischen den Spulenenden LA und LB, so daß die Versorgungsspannung durch nahezu Kurzschlußwirkung weit unter Betriebsspannungsniveau abgesenkt wird. Die Tyristoranordnung wird durch die Kombination aus vertikalen und lateralen bipolaren Transistoren gebildet.

Eine Spannungsbewertung an der spulenartigen Antenne 2 ist alternativ auch gemäß Figur 5 möglich, welche die Anordnung eines Transistors mit gategesteuertem Durchbruchs zeigt, welche zusätzlich in der Thyristorschaltung verwendet werden kann.

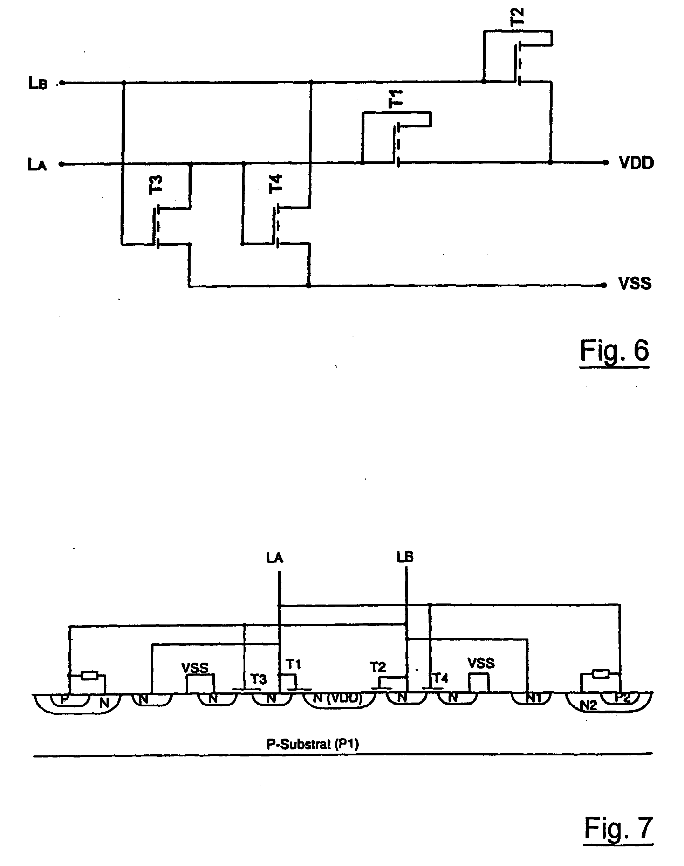

Die Überlastschutzfunktion wird in Zusammenwirken mit einem der Spannungsversorgungseinheit 15 zugeordneten Gleichrichter nach Figur 6 schaltungstechnisch umgesetzt. Der Gleichrichter besteht aus einer Brückenschaltung der Bipolar-Transistoren T1, T2, T3 und T4. Eingangsseitig des Gleichrichters liegt die Antennenspannung an (LA, LB); ausgangsseitig ist die hieraus gewonnene gleichgerichtete Spannung (VDD, VSS) abgreifbar.

Gemäß Figur 7 kann die Realisierung des vorstehend beschriebenen Überlastschutzes, der auch als Latchup-Schutzstruktur bezeichnet werden kann, durch eine Plazierung auf dem Substrat in örtlicher Nähe zum Gleichrichter erfolgen. Lange Ausräumzeiten der parasitären Bipolar-Strukturen führen dazu, daß die speichernde Wirkung des Flip-Flops, der den Zustand der niedrigen Versorgungsspannung hält, auch nach der folgenden umgepolten Halbwelle noch erhalten bleibt. Somit wird ein Spannungsabfall des Gleichrichters T1 bis T4 vermieden. Gewöhnlich soll durch niederohmige Anschlüsse der Diffusionszonen und Wannen auf dem Substrat ein ungewünschter Latchup-Effekt vermieden werden oder zumindest zu derart hohen Strömen hinausgeschoben werden, daß dieser praktisch nicht mehr auftritt. Im vorliegenden Fall wird jedoch durch eine gezielte Nutzung des Latchup-Effekts der Überlastschutz bewirkt, da die Spannung an der Latchup-Struktur bis auf zirka 1 Volt zusammenbricht, also weit unter Betriebsspannungsniveau. Die Zündung des Latchups, d.h. das Setzen des Flip-Flops, kann direkt durch den Spannungsabfall der zum Gleichrichter geschalteten Transistoren T3, T4 erfolgen. Sobald dieser Spannungsabfall die Schaltschwelle der parasitären Bipolar-Transistoren überschreitet, wird der Latchup gezündet. Vorteilhaft ist dabei, daß mit höher werdender Temperatur die Schaltschwelle der Bipolar-Transistoren sinkt, während der Spannungsabfall der MOS-Transistoren im Gleichrichter mit wachsender Temperatur steigt. Dabei wird bei hoher Temperatur der Latchup sinnvoller Weise schon bei niedrigeren Strömen ausgelöst als bei einer niedrigen Temperatur.

Die Erfindung beschränkt sich nicht auf das vorstehend beschriebene bevorzugte Ausführungsbeispiel. Vielmehr sind andere Varianten denkbar, die selbst bei einer anders gearteten Ausführung von der Erfindung Gebrauch machen. So ist die schaltungstechnische Umsetzung der Erfindung nicht allein auf die CMOS-Technologie beschränkt. Auch läßt sich der erfindungsgemäße Überlastschutz ebenfalls bei geeigneten Voraussetzungen in einen aktiven Transponder integrieren.

## Patentansprüche

1. Kontaktloser Transponder für ein elektronisches Datenübertragungssystem, der mindestens eine Antenne (2) zum Senden und Empfangen von HF-Signalen umfaßt, die mit einer Empfangseinheit (11) zur Demodulation des empfangenen HF-Signals verbunden ist und mit einer ebenfalls mit der Antenne (2) in Verbindung stehenden und zur Datenübertragung eine Modulation des HF-Signals ausführenden Sendeeinheit (14), denen eine Steuereinheit (12) mit nichtflüchtiger Speichereinheit (13) zur Steuerung der internen Betriebsabläufe nachgeschaltet ist, wobei eine Spannungsversorgungseinheit (15) vorgesehen ist, die mit einem Spannungsbegrenzer (16) zur Absenkung einer von der Antenne (2) aufgenommenen überhohen Versorgungsspannung auf Betriebsspannungsniveau zusammenwirkt,
**dadurch gekennzeichnet**,
daß Mittel zum Erkennen des Belastungszustandes des Spannungsbegrenzers (16) vorgesehen sind und eine nachgeschaltete Auswerteeinheit (18) bei Erreichen eines vordefinierten Überlastungszustandes des Spannungsbegrenzers (16) durch Aufschalten einer niederohmigen Last parallel zur Antenne (2) die Versorgungsspannung soweit unter Betriebsspannungsniveau absenkt, daß durch die Auswerteeinheit (18) noch ein Halten des Zustand der niedrigen Versorgungsspannung gewährleistbar ist, um die durch Überlastung des Spannungsbegrenzers (16) anfallende Wärmeentwicklung zu stoppen und abzubauen.

2. Kontaktloser Transponder nach Anspruch 1,
**dadurch gekennzeichnet**,
daß zum Halten des Zustandes der niedrigen Versorgungsspannung die Auswerteeinheit (18) eine Flip-Flop-Glied umfaßt, das die Auswerteeinheit (18) bei Erreichen des Überlastzustandes setzt und das sich bei Fortfall der über die Antenne (2) aufgenommenen Versorgungsspannung selbsttätig rücksetzt.

3. Kontaktloser Transponder nach Anspruch 1,
**dadurch gekennzeichnet**,
daß das Mittel zum Erkennen des aktuellen Belastungszustandes des Spannungsbegrenzers (16) nach Art eines Strommessers ausgebildet ist, der den Strom im Spannungsbegrenzer (16) detektiert.

4. Kontaktloser Transponder nach Anspruch 1,
**dadurch gekennzeichnet**,
daß das Mittel zum Erkennen des aktuellen Belastungszustandes des Spannungsbegrenzers (16) nach Art eines Spannungsmessers ausgebildet ist, welcher die an der Antenne (2) anliegende Versorgungsspannung detektiert.

5. Kontaktloser Transponder nach Anspruch 1,
**dadurch gekennzeichnet**,
daß das Mittel zum Erkennen des aktuellen Belastungszustandes des Spannungsbegrenzers (16) als Temperaturfühler ausgebildet ist, der die Transponder-Betriebstemperatur detektiert.

6. Kontaktloser Transponder nach Anspruch 1,
**dadurch gekennzeichnet**,
daß das Mittel zum Erkennen des aktuellen Belastungszustandes des Spannungsbegrenzers (16) als Feldstärkemesser ausgebildet ist, der die empfangene Feldstärke des HF-Signals erfaßt.

7. Kontaktloser Transponder nach Anspruch 1,
**dadurch gekennzeichnet,**
daß bei einem aktiven Transponder zur Versorgung mit der Betriebsspannung zusätzlich eine Batterie oder ein Solarelement vorgesehen ist.

8. Kontaktloser Transponder nach Anspruch 1,
**dadurch gekennzeichnet**,
daß eine der Antenne (2) nachgeschaltete Gleichrichtereinheit (15) aus dem empfangenen HF-Signal die Versorgungsspannung als Gleichspannung gewinnt, wobei ein Stützkondensator (17) zur Ladungsspeicherung vorgesehen ist.

9. Kontaktloser Transponder nach Anspruch 8,
**dadurch gekennzeichnet**,
daß Gleichrichtereinheit (15) nach Art einer Brückenschaltung aufgebaut ist.

10. Kontaktloser Transponder nach Anspruch 1,
**dadurch gekennzeichnet**,
daß die Sendeeinheit (14) zur Datenübertragung eine Belastungsmodulation des HF-Signals durchführt.

11. Kontaktloser Transponder nach Anspruch 1,
**dadurch gekennzeichnet**,
daß der Transponder (1) in CMOS-Technologie ausgeführt ist, wobei unter Nutzung des Latchup-Effekts der Transponder (1) in den Zustand der abgesenkten Versorgungsspannung schaltbar ist.

12. Kontaktloser Transponder nach Anspruch 11,
**dadurch gekennzeichnet**,
daß eine den Latchup-Effekt bewirkende doppelte Thyristorschaltung auf einem Substrat vor einer Gleichrichterschaltung angeordnet ist.

13. Elektronisches Datenübertragungssystem mit einem kontaktlosen Transponder nach einem der vorstehenden Ansprüche 1 bis 12,
**dadurch gekennzeichnet**,
daß der Transponder (1) mittels der Antenne (2) mit einem über eine korrespondierende Antenne (4) verfügenden Schreib/Lesegerät (3) im Datenaustausch steht.

14. Elektronisches Datenübertragungssystem nach Anspruch 13,
**dadurch gekennzeichnet**,
daß das Schreib-/Lesegerät (3) einen Oszillator (7) zum Erzeugen einer taktführenden Trägerfrequenz umfaßt, auf dessen HF-Signal eine Sendeeinheit (9) Daten aus einer Datenverarbeitungseinrichtung (8) moduliert, die der Antenne (4) zugehen, welche ebenfalls mit einer Empfangseinheit (10) verbunden ist, die nach einer Demodulation des empfangenen HF-Signals die Empfangsdaten der Datenverarbeitungseinrichtung (8) zur Verfügung stellt.
